# EUROPÄISCHE PATENTSCHRIFT

(11) **EP 1 019 644 B1**
(45) Veröffentlichungstag und Bekanntmachung des Hinweises auf die Patenterteilung: **12.06.2002**
(21) Anmeldenummer: 98955362.3
(22) Anmeldetag: 28.09.1998
(51) Int. Cl.: F16H 29/08

(54) **GETRIEBE MIT STUFENLOS EINSTELLBARER ÜBERSETZUNG**
GEARBOX WITH CONTINUOUSLY ADJUSTABLE MULTIPLICATION
TRANSMISSION A DEMULTIPLICATION PROGRESSIVE

(30) Priorität: 01.10.1997 DE 19743483
(43) Veröffentlichungstag der Anmeldung: 19.07.2000
(73) Patentinhaber: Berger, Matthias, 99423 Weimar (DE)
(72) Erfinder: Berger, Matthias, 99423 Weimar (DE)
(74) Vertreter: Wagner, Gerd, Dipl.-Phys.
(86) Internationale Anmeldenummer: DE9802901
(87) Internationale Veröffentlichungsnummer: WO9918366

(56) Entgegenhaltungen:
- DE-C- 474 205
- GB-A- 2 137 724

## Beschreibung

Die Erfindung betrifft ein Getriebe mit stufenlos einstellbarer Übersetzung zur Wandlung von Drehzahlen und Drehmomenten zwischen zwei Wellen. Derartige Wandler finden in der gesamten Antriebstechnik, insbesondere bei Werkzeugmaschinen und bei Fahrzeugantrieben Verwendung.

Das erfindungsgemäße Getriebe gestattet eine gleichförmige Bewegungsübertragung von der An- auf die Abtriebswelle. Es zeichnet sich durch erheblich verringerte Verschleißerscheinungen an seinen funktionsbestimmenden Getriebeelementen aus. Das stufenlos einstellbare Getriebe besteht aus wenigstens zwei zeitlich versetzt arbeitenden Getriebeeinheiten, die die Drehbewegung der Antriebswelle absatzweise für jeweils ein Zeitintervall (Kraftübertragungsphase) auf die Abtriebswelle übertragen. Dabei wird die gleichförmige Drehbewegung der Antriebswelle in jeder Getriebeeinheit in der Kraftübertragungsphase durch ein erstes Kraftühertragungsmittel in eine erste gleichförmige Translationsbewegung umgewandelt, durch eine veränderbare Übersetzungseinrichtung diese Bewegung in eine zweite gleichförmige Translationsbewegung (Hub) mit einer von der Übersetzungseinstellung abhängigen Geschwindigkeit umgeformt und durch das zweite Kraftübertragungsmittel diese Translationsbewegung (Hub) in eine gleichförmige Drehbewegung umgewandelt, die wiederum über eine selbstschaltende oder schaltbare Kupplung auf die Abtriebswelle übertragen wird. Ein derartiges Getriebe ist als eine Variante von Schaltwerksgetrieben aus DE - PS 474 205 bekannt. Dort wird ein Getriebe vorgeschlagen, bei dem die Drehbewegung der Antriebswelle mittels mehrerer auf der treibenden Welle angeordneter Kurvenscheiben in eine Hin- und Herbewegung von Schubstangen und unter Zwischenschaltung einer veränderlichen Übersetzungseinrichtung in eine Hin- und Herbewegung von Zahnstangen umgewandelt wird, die anschließend über Zahnräder und Sperrkupplungen (Freilaufkupplungen) nacheinander auf die Abtriebswelle einwirken und diese antreiben. Die Übersetzungseinrichtung besteht aus einem zweiarmigen Hebel mit verstellbarem Drehpunkt zur Veränderung der jeweils wirksamen Hebellängen und damit auch der Übersetzungsgröße. Während der Kraftübertragung bewegen sich die Zahnstangen mit gleichbleibender Geschwindigkeit und können somit die Abtriebswelle mit gleichbleibender Winkelgeschwindigkeit antreiben. In ähnlicher Weise erfolgt auch die Bewegungsübertragung in der Vorrichtung nach US - PS 45 65 105.

Ein wesentlicher Mangel derartiger Getriebesysteme besteht darin, daß die bei der Umsetzung der Translationsbewegung in die Drehbewegung der getriebenen Welle, z.B. der Hin- und Herbewegung der Zahnstange in die Drehbewegung des Zahnrads in einem Zahnstangen Zahnradtrieb auftretenden Verschleißcrscheinungen gerade im Dauerbetrieb von beträchtlicher Größe sind und die Zuverlässigkeit des Gesamtgetriebes erheblich beeinträchtigen können. Diese Verschleißerscheinungen betreffen insbesondere diejenigen Bereiche der Verzahnung von Zahnstange und Zahnrad, die bei der periodischen Belastung im Dauerbetrieb häufiger einer besonders großen mechanischen Belastung ausgesetzt sind als andere Bereiche. Aber auch beim Einsatz von Kurvengetrieben als zweites Kraftübertragungsmittel ist der dort in den Bereichen zwischen Eingriffs- und Kurvengliedern bzw. zwischen Eingriffsgliedern und dessen Führungen auftretende Verschleiß trotz der geringeren Rollreibung nicht vernachlässigbar. Die ungleichmäßige Verteilung des Materialabtrags durch Verschleiß infolge der ungleichmäßigen Beanspruchung der zur Verfügung stehenden Hubstrecke der Zahnstange bzw. des Eingriffsglieds wird noch dadurch verstärkt, daß bei einem - infolge Vergrößerung der Übersetzungseinstellung - verringerten Hub (Verringerung der Länge der Hubstrecke) die zu übertragende Kraft - unter der Voraussetzung konstanter Übertragungsleistung - noch zunimmt. Die starke und vor allem auch ungleichmäßige Abnutzung an den funktionsbestimmenden Kontaktflächen der die Bewegung übertragenden Getriebeelemente des zweiten Kraftübertragungsmittels hat aber Abweichungen von der gewünschten Relativbewegung der Getriebemittel zur Folge, die wiederum die Ursache für einen rasch fortschreitenden Verschleißprozeß sind.

Die Aufgabe der Erfindung liegt daher in der Schaffung eines Getriebes mit kontinuierlich veränderbarem Übersetzungsverhältnis mit möglichst gleichförmiger Übertragung der Bewegung, bei dem durch einen weitgehend verringerten Verschleiß an funktionsbestimmenden Kontaktflächen, insbesondere des abtriebsseitigen Getriebe-Teilsystems (zweites Kraftübertragungsmittel), die Zuverlässigkeit und Betriebsdauer des Gesamtgetriebes wesentlich erhöht werden kann.

Die Lösung der Aufgabe unter Verwendung eines Getriebes für eine stufenlose Drehzahlwandlung der eingangs beschriebenen Art erfolgt gemäß den Merkmalen des Hauptanspruchs. Hierbei wird eine fortwährende Verlagerung des für den Hub benutzten Bereiches innerhalb der nutzbaren Hubstrecke des zweiten Kraftübertragungsmittels während des Getriebelaufs vorgenommen. Wird beispielsweise ein Hebelsystem als Übersetzungseinrichtung verwendet, kann erfindungsgemäß durch eine zusätzliche Bewegung des Drehpunktes des Hebelsystems parallel zu den Bewegungsbahnen der Hubelemente der beiden Kraftübertragungsmittel eine fortwährende Verlagerung der Verschleißbereiche und damit abtriebsseitig eine gleichmäßigere Abnutzung an den Zahn- bzw. Kurvenflanken und Führungsbahnen der Hubelemente erreicht werden. Diese Überlagerungsbewegung erfolgt mit einer die Abtriebsbewegung nur unwesentlich beeinflussenden Geschwindigkeit.

Die Erfindung soll anhand eines Ausführungsbeispiels sowie dazugehörigen schematischen Abbildungen näher erläutert werden. (Es wird dabei stets vorausgesetzt, daß die Übersetzungseinstellung über die hier betrachteten Zeitabschnitte gerade konstant gehalten wird und sich die Antriebswelle gleichförmig dreht.)
Fig. 1 zeigt beispielhaft eine Getriebeeinheit in Seitenansicht, die an- und abtriebsseitig ebene Kurvenscheiben benutzt und zur Bewegungsübertragung und Übersetzungseinstellung ein Hebelsystem anwendet.
Fig. 2 zeigt einen Teil der Übersetzungseinrichtung des Getriebes nach Fig. 1 mit der erfindungsgemäßen Einrichtung zur Verschleißminderung.

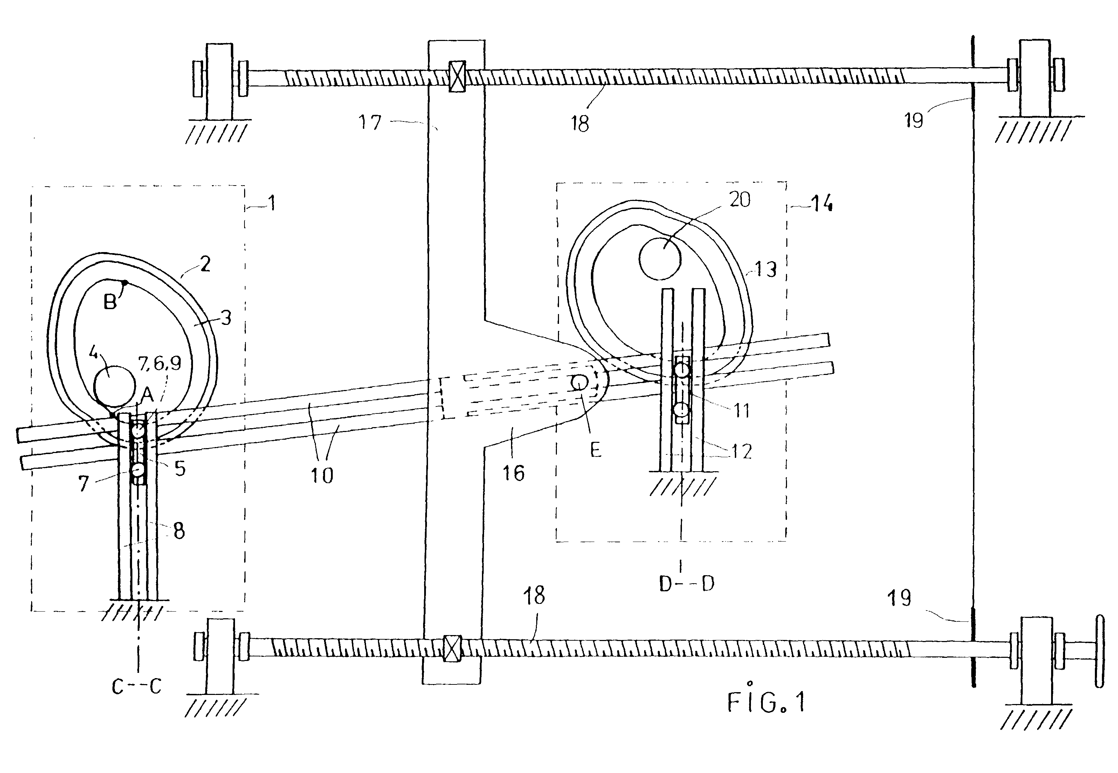

In Figur 1 ist schematisch ein Getriebe dargestellt, dessen Getriebeeinheiten axial nebeneinander angeordnet sind. Aus Gründen der Übersichtlichkeit zeigt die Figur 1 allerdings nur eine der beiden, gleich aufgebauten Getriebeeinheiten. Als ein erstes Kraftübertragungsmittel 1 wird ein ebenes Kurvengetriebe mit einer Kurvenscheibe als Kurvenglied 2 verwendet, die beidseitig mit einer Nutkurve 3 versehen ist. Das Kurvenglied ist verdrehfest mit einer Antriebswelle 4 verbunden. Im Lastbereich - in der Figur der Bereich zwischen Position A und Position B bei rechtsdrehender Scheibe - hat die Kurvenflanke der Nutkurve die Gestalt einer Kreisevolvente. Als Eingriffsglied 5 dient ein Hubschlitten mit Kurvenrollen 6. Das Eingriffsglied wird mittels Rollen 7 entlang von Führungsschienen 8 in einer Führungsbahn C―C geradlinig geführt. Mit Hilfe von Hebelschienenrollen 9, die im Ausführungsbeispiel auf derselben Achse wie die Kurvenrollen 6 gelagert sind, wird die Bewegung des Hubschlittens auf ein Hebelsystem mit Hebelschienen 10 übertragen. Das drehbar gelagerte Hebelsystem bewegt einen Hubschlitten , der als Eingriffsglied 11 für ein zweites Kraftübertragungsmittel 14 dient. Er ist von gleichem Aufbau wie das Eingriffsglied 5 und wird durch Führungsschienen 12 in einer Führungsbahn D―D geführt, die parallel zu der Führungsbahn C―C und den Führungsschienen 8 verläuft. Er treibt mit seiner Kurvenrolle das Kurvenglied 13 des Kraftübertragungsmittels 14, das analog dem Kurvenglied 2 ausgebildet ist und Drehschwingungen ausführt. Von diesen Drehschwingungen werden jeweils in der Kraftübertragungsphase die Abschnitte gleichförmiger Drehbewegung über eine - hier nicht dargestellte - selbstschaltende oder schaltbare Kupplung auf die Abtriebswelle 20 übertragen. Die drehbare Lagerung des Hebelsystems erfolgt in Lagerhaltern 16 mittels durch Kröpfung versetzt angeordneten Achsstummeln. Die Lagerhalter sind an einem Rahmen 17 befestigt, der unter Verwendung von Gewindespindeln 18 relativ zum Gehäuse verschoben und in der vorgewählten Position fixiert werden kann. Die Verdrehung der Gewindespindeln erfolgt immer gleichsinnig und um jeweils gleiche Beträge, z.B. unter Anwendung eines Kettengetriebes 19.

Unter der Voraussetzung einer gleichförmigen Drehbewegung der Antriebswelle 4 führt das Eingriffsglied 5 eine schwingende geradlinige Bewegung aus, die in der Kraflübertragungsphase eine von der Übersetzungseinstellung unabhängige gleichförmige Bewegung darstellt. Hingegen führt das Eingriffsglied 11 eine schwingende geradlinige Bewegung aus. die in der Kraftübertragungsphase gleichförmig ist und deren (konstante) Geschwindigkeit von der jeweiligen Übersetzungseinstellung abhängt. Das Übersetzungsverhältnis bestimmt sich aus dem Verhältnis der wirksamen Hebellängen des Hebelsystems. Dieses ist wiederum durch das Verhältnis der Abstände zwischen dem Drehpunkt E des Hebelsystems und den Führungsbahnen C―C, D--D der Eingriffsglieder definiert. Diese Abstände werden durch die Positionierung des Rahmens 17 mit Hilfe der Gewindespindeln 18 festgelegt, da der Rahmen 17 die Lagerhalter 16 für die drehbare Lagerung des Hebelsystems trägt. Durch die Verdrehung der Gewindespindeln kann somit das Übersetzungsverhältnis stufenlos verstellt werden und innerhalb gewisser Grenzen jeden beliebigen, vorgegebenen Wert annehmen.
Die versetzte Anordnung der Achsstummel ermöglicht es, den Drehpunkt E des Hebelsystems bis zur Führungsbahn D―D und auch darüber hinaus zu verschieben. Dadurch kann die Abtriebsdrehzahl bis auf den Wert Null abgesenkt und bei einer Ausstattung mit geeigneten Kupplungen auch eine Umkehr der Drehrichtung der Abtriebswelle 20 (bei unveränderter Antriebsrichtung) vorgenommen werden.
Das Eingriffsglied des ersten oder zweiten Kraftübertragungsmittels muß nicht - wie weiter oben beschrieben - zugleich auch das Hubelement sein, das in die Hebelschienen 10 des Hebelsystems eingreift. Eingriffsglied und Hubelement können auch unterschiedliche Bauteile sein, zwischen denen eine Kraftübertragung erfolgt.
An Stelle von Kurvengetrieben können auch Kettengetriebe oder Zahnrad-Zahnstangen-Getriebe als erstes oder zweites Kraftübertragungsmittel zur Anwendung gelangen.
Bei Verwendung eines Zahnrad-Zahnstangen-Getriebes als erstes Kraftübertragungsmittel muß allerdings ein Teil der Verzahnung des Zahnrades ausgespart und eine Vorrichtung zur Rückbewegung der Zahnstange vorgesehen werden. Zweckmäßig ist die Verwendung des Zahnrad-Zahnstangen-Getriebes als zweites Kraftübertragungsmittel.

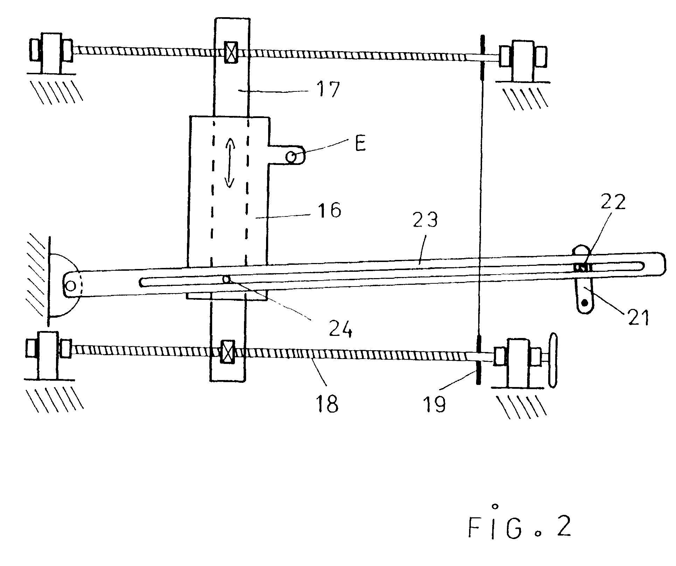

Figur 2 zeigt schematisch den Teil der Übersetzungseinrichtung des Getriebes gemäß Fig. 1, der mit der erfindungsgemäßen Einrichtung versehen wurde. Der Lagerhalter 16 ist hierbei - im Unterschied zur Ausführung nach Fig. 1 - am Rahmen 17 parallel zu den Führungsbahnen C―C, D―D der Eingriffsglieder verschiebbar angeordnet. Infolge der parallelen Ausrichtung hat die Verschiebung des Lagerhalters keinen Einfluß auf die Abstände zwischen dein Drehpunkt E des Hebelsystems und den Führungsbahnen der Eingriffsglieder und somit auch keinen Einfluß auf die Größe des Übersetzungsverhältnisses. Eine im Gehäuse drehbar gelagerte Kurbel 21 wird von der Antriebswelle über ein hier nicht dargestelltes Getriebe mit so großem Übersetzungsverhältnis bewegt, daß ihre Drehgeschwindigkeit im Vergleich zur Drehgeschwindigkeit der Antriebswelle vernachlässigbar klein ist. Die Kurbel besitzt einen Mitnahmestift 22, der in eine drehbar im Gestell gelagerte Schleife 23 eingreift und diese zu langsamen Drehschwingungen anregt. Die Schleife 23 greift in einen Mitnahmestift 24, befestigt am Lagerhalter 16, ein. Durch die Bewegung der Schleife wird der Lagerhalter längs seiner Führung am Rahmen langsam verschoben. Dadurch verändert der Drehpunkt E des Hebelsystems seine Lage. Infolgedessen verschiebt sich auch mit einer die Abtriebsbewegung nur unwesentlich beeinflussenden Geschwindigkeit der vom Hubschlitten 11 benutzte Bereich innerhalb der nutzbaren Hubstrecke. Man erreicht somit eine gleichmäßigere Abnutzung der Kurvenflanken sowie der Führungsschienen des zweiten Kraftübertragungsmittels.

Die hier beschriebene Ausführungsform der Erfindung stellt nur eine bevorzugte Lösungsvariante des Problems dar. Entscheidend für andere konstruktive Lösungen ist, daß im zweiten Kraftübertragungsmittel durch eine fortwährende langsame Verschiebung des für den Hub benutzten Bereiches ein gleichmäßigerer Materialabtrag auf der gesamten nutzbaren Hubstrecke erfolgen kann. Diese Zusatzbewegung sollte allerdings - innerhalb des zu nutzenden Stellbereichs - die Größe des Hubs und damit auch die Größe der Übersetzung nicht wesentlich verändern.

## Patentansprüche

1. Getriebe mit stufenlos einstellbarer Übersetzung, bei dem durch wenigstens zwei zeitlich versetzt arbeitende Getriebeeinheiten die Drehbewegung einer Antriebswelle (4) absatzweise für jeweils ein Zeitintervall, bezeichnet als Kraftübertragungsphase, auf eine Abtriebswelle (20) übertragen wird, wobei jede Getriebeeinheit ein erstes Kraftübertragungsmittel (1), eine veränderbare Übersetzungseinrichtung und ein zweites Kraftübertragungsmittel (14) sowie eine selbstschaltende oder schaltbare Kupplung besitzt und wobei - unter der Voraussetzung gerade konstant gehaltener Übersetzungseinstellung - in der Kraftübertragungsphase das erste Kraftübertragungsmittel (1) die gleichförmige Drehbewegung der Antriebswelle (4) in eine gleichförmige Translationsbewegung umwandelt, die Übersetzungseinrichtung diese Bewegung in eine andere, ebenfalls gleichförmige Translationsbewegung mit einer von der Übersetzungseinstellung abhängigen Geschwindigkeit umformt und das zweite Kraftübertragungsmittel (14) diese Translationsbewegung in eine gleichförmige Drehbewegung umwandelt, die wiederum über die Kupplung auf die Abtriebswelle (20) übertragen wird,
**dadurch gekennzeichnet,**
**daß** zusätzlich Mittel (21, 22, 23, 24) vorgesehen sind, die den für die übersetzte gleichförmige Translationsbewegung benutzten Bereich innerhalb der gesamten für diese Translationsbewegung nutzbaren Hubstrecke des zweiten Kraftübertragungsmittels während des Getriebelaufs mit einer die Abtriebsbewegung nur unwesentlich beeinflussenden Geschwindigkeit verschieben.

2. Getriebe mit stufenlos einstellbarer Übersetzung nach Anspruch 1 mit einer ein Hebelsystem enthaltenden Übersetzungseinrichtung,
**dadurch gekennzeichnet,**
**daß** das Hebelsystem in einem durch einen Rahmen (17) geführten Lagerhalter (16) drehbar gelagert und der Rahmen mittels eines Übersetzungsstellers mit einer oder mehreren Gewindespindeln (18) parallel verschiebbar und in der vorgewählten Position fixierbar ist, daß das Hebelsystem Hebelschienen (10) besitzt, in die ein Hubelement jedes der beiden Kraftübertragungsmittel (1,14) eingreift, wobei die Hubelemente in zueinander parallelen geradlinigen Bewegungsbahnen (C―C, D―D) geführt werden, daß durch den Übersetzungssteller der Rahmen (17) mit dem Lagerhalter (16) derart verschiebbar ist, daß das Verhältnis der Abstände zwischen dem Drehpunkt (E) des Hebelsystems und den Bewegungsbahnen stufenlos veränderbar ist, und daß eine durch die Antriebswelle (4) angetriebene schwingende Kurbelschleife (21, 22, 23) den Lagerhalter (16) innerhalb seiner Führungsbahn im Rahmen (17) zusätzlich bewegt und positioniert.

## Claims

1. A transmission gear with a steplessly adjustable translation ratio, wherein the rotary motion of a drive shaft (4) is intermittently for in each case a time interval, designated as force transmission phase, transferred to a driven shaft (20) by at least two staggered operating gear transmission units, wherein each gear transmission unit comprises a first force transmission means (1), a changeable translation device and a second force transmission means (14) as well as an automatic switching or switchable coupling and wherein - under the precondition of a just constant maintained translation setting - the first force transmission means (1) transforms the uniform rotary motion of the drive shaft (4) into a uniform rectilinear motion during the force transmission phase, wherein the translation device translates this motion into another, also uniform rectilinear motion with a speed depending on the translation setting and wherein the second force transmission means (14) transforms this rectilinear motion into a uniform rotary motion, wherein the uniform rotary motion is transferred to the driven shaft (20) through the coupling, the improvement being **characterized by** additional means (21,22,23,24), wherein the additional means are shifting the region used for the translated uniform rectilinear motion within the complete stroke distance usable for this rectilinear motion of the second force transmission means during the running of the transmission gear with a speed influencing the driven motion only unsubstantially.

2. A transmission gear with a steplessly adjustable translation ratio according to claim 1 with a translation device including a lever system, wherein the lever system is rotatably supported in a bearing support (16) led through a frame (17) and wherein the frame is parallel shiftable by way of a translation set unit with one or several threaded spindles (18) and is fixable in the preselected position, wherein the lever system is furnished with lever rails (10), wherein a stroke element of each of the two force transmission means (1,14) engages into the lever rails (10), wherein the stroke elements are guided in straight line motion tracks (C -- C, D -- D), disposed parallel to each other, wherein the frame (17) with the bearing support (16) is such shiftable by the translation set unit, that the ratio of the distances between the hinge point (E) of the lever system and the straight line motion tracks is steplessly changeable, and wherein an oscillating crank loop (21,22,23) driven by the drive shaft (4) additionally moves and positions the bearing support (16) within its guide track in the frame (17).

## Revendications

1. Engrenage avec une transmission réglable de façon continue, dans lequel le mouvement de rotation d'un arbre menant (4) est transmis par reprises pour respectivement un intervalle de temps, qualifié de phase de transmission de force, à un arbre de sortie (20) par au moins deux unités d'engrenage travaillant en temps différé, chaque unité d'engrenage présentant un premier moyen de transmission de force (1), un dispositif changeable de transmission et un deuxième moyen de transmission de force (14) ainsi qu'un embrayage embrayant automatiquement ou embrayable, et - à condition d'un réglage de transmission maintenu justement constant - le premier moyen de transmission de force (1) transformant le mouvement uniforme de rotation de l'arbre menant (4) en un mouvement uniforme de translation lors de la phase de transmission de force, le dispositif de transmission transformant ce mouvement en un autre mouvement de translation lui aussi uniforme avec une vitesse dépendant du réglage de transmission, et le deuxième moyen de transmission de force (14) transformant ce mouvement de translation en un mouvement uniforme de rotation qui, de son côté, est transmis par l'embrayage à l'arbre de sortie (20), **caractérisé par le fait que** l'on prévoit en outre des moyens (21, 22, 23, 24) qui, durant la marche de l'engrenage, déplacent la zone utilisée pour le mouvement uniforme transmis de translation, à l'intérieur de la distance totale de course du deuxième moyen de transmission de force, laquelle est utilisable pour ce mouvement de translation, avec une vitesse qui n'a qu'une influence inessentielle sur le mouvement de sortie.

2. Engrenage avec une transmission réglable de façon continue selon la revendication 1, avec un dispositif de transmission comprenant un système de leviers, **caractérisé par le fait que** le système de leviers est logé à rotation dans un support de logement (16) mené à travers un cadre (17) et que le cadre peut être déplacé parallèlement au moyen d'un régleur de transmission avec une ou plusieurs broches filetées (18) et peut être fixé dans la position choisie préalablement, que ledit système de leviers possède des rails de levier (10) dans lesquels se prend un élément de course de chacun des deux moyens de transmission de force (1, 14), les éléments de course étant guidés dans des chemins rectilignes de mouvement (C--C, D--D) parallèles entre eux, que le cadre (17) avec le support de logement (16) peut être déplacé par le régleur de transmission de telle manière que le rapport des distances entre le pivot (E) du système de leviers et les chemins de mouvement peut être varié de façon continue, et qu'un mécanisme oscillant coulisse-manivelle (21, 22, 23) actionné par l'arbre menant (4) déplace et positionne supplémentairement le support de logement (16) à l'intérieur de sa glissière dans le cadre (17).
